# EUROPEAN PATENT APPLICATION

(11) **EP 3 771 819 A1**
(43) Date of publication of application: **03.02.2021**
(21) Application number: 19189603.4
(22) Date of filing: 01.08.2019
(51) Int. Cl.: F03D 7/04, F03D 17/00, F03D 7/02

(54) **A METHOD FOR COMPUTER-IMPLEMENTED DETERMINATION OF A WIND SPEED PROFILE INFORMATION OF A WIND FIELD**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

A method for computer-implemented determination of a wind speed profile information (WSPI) of a wind field (WF) approaching a turbine (1, 2) of a wind farm is described. The wind farm comprises a first upstream wind turbine (1) and a second downstream wind turbine (2), wherein at each time point of one or more time points during the operation of the wind farm the following steps are performed: obtaining a number of measurement values (MV) of the second wind turbine (2), the number of measurement values (MV) being captured by respective sensors of the second wind turbine (2) to monitor and/or control the second wind turbine (2); and determining a wind speed profile information (WSPI) by processing the number of measurement values (MV) by a trained data driven model (MO), where the number of measurement values (MV) is fed as a digital input to the trained data driven model (MO) and the trained data driven model (MO) provides the wind speed profile information (WSPI) as a digital output, where the wind speed profile information (WSPI) at least comprises a horizontal and/or vertical position parameter of a wake center (WC) of the wind field in direction to the second wind turbine (2) and caused by the first wind turbine (1).

## Description

The present invention relates to a method and an apparatus for computer-implemented determination of a wind speed profile information of a wind field approaching a turbine of a wind farm.

Wind turbines of wind farms comprise an upper section with a rotor and a nacelle on the top of a tower, where the upper section can be rotated around a vertical yaw axis in order to vary the yaw angle of the respective turbine. The yaw angle of a wind turbine is usually adjusted such that the rotor of the wind turbine faces the wind. To do so, wind sensors (i.e. anemometers) are installed on the respective wind turbines to estimate the wind direction.

In a wind farm, an upstream turbine extracts energy from the wind and thus reduces the wind speed with the result of reduced wind speeds downstream. A turbine which is located downstream of the first turbine is thus facing reduced wind speeds. The downstream wind turbine detects the wind direction by means of its wind vane. Therefore, the downstream turbine aligns its yaw angle to face the wind direction perpendicular. However, this kind of controlling may lead to sub-optimal performance of the annual energy production (AEP) of the wind farm as this self-oriented operation of the turbines doesn't take wake into account. It is known, that adapting the operation of the upstream turbine in a way to steer wake away from the downstream turbine can increase overall performance of the wind farm resulting in an increased AEP. This requires cooperative controlling of the upstream and the downstream wind turbine.

However, cooperative controlling of the turbines to avoid wake approaching a downstream turbine cannot be carried out in a sufficient manner as simulations and engineering models are difficult to develop due to the stochastic nature of wind.

It is an object of the present invention to provide an easy method and apparatus in order to be able to predict the center of wake in a wind speed profile of a wind field approaching a turbine of a wind farm.

These objects are solved by the independent claims. Preferred embodiments of the invention are defined in the dependent claims.

According to a first aspect, a method for computer-implemented determination of a wind speed profile information of a wind field approaching a turbine of a wind farm is suggested. The wind farm comprises a first upstream wind turbine (short: upstream turbine) and a second downstream wind turbine (short: downstream turbine), i.e. a pair of first and second wind turbines. The method is applied to this pair of turbines and may also be applied to several of such pairs. The "downstream" located turbine is located downstream with respect to the wind direction relative to a first upstream wind turbine.

Each of the first and second wind turbines comprises an upper section on top of a tower, the upper section being pivotable around a vertical yaw axis and having a nacelle and a rotor with rotor blades. The rotor is attached to the nacelle and the rotor blades are rotatable by wind around a horizontal rotor axis.

According to the method of the invention, the following steps are performed at each time point of one or more time points during the operation of the wind farm.

In a first step, a number of measurement values of the second wind turbine is obtained. The number of measurement values is captured by respective sensors of the second wind turbine to monitor and/or control the second wind turbine.

In a second step, a wind speed profile information is determined by processing the number of measurement values by a trained data driven model. The number of measurements values is fed as a digital input to the trained data driven model and a trained data driven model provides the wind speed profile information as a digital output. The wind speed profile information at least comprises a horizontal and/or vertical position parameter of a wake center of the wind field in direction to the second turbine and caused by the first wind turbine. The wind speed profile information then allows determining a horizontal and/or vertical wind speed profile approaching the second turbine.

The method of the invention provides an easy and straight forward method for determining the center of wake in a wind field which has passed an upstream turbine and is approaching a downstream turbine. To do so, a trained data driven model is used. This model is trained by training data comprising a plurality of simulation data representing measurement values of the second wind turbine together with the information about the wake center determined from the simulation representing the target variables.

Any known data driven model being learned by machine learning may be used in the method according to the invention. In a particularly preferred embodiment, the trained data driven model is a neural network, preferably a Deep Neural Network. Nevertheless, other trained data driven models may also be implemented in a method of the invention, e.g. models based on decision trees or Support Vector Machines.

According to a further preferred embodiment, the trained data driven model is a neural network being trained by minimizing a cost function thereby adapting weights of all hidden layer nodes accordingly. In such a neural network, the measurement values will be used as input channels. The neural network may have one or more hidden layers. These hidden layers may be fully connected. In another embodiment, the hidden layers may be partially connected with each other. Fully connected means that all nodes from the input layer are connected to each node of the first hidden layer. The same holds for the first hidden layer to a second hidden layer, if applicable. Finally, the output layer provides the target variables in form of the wind profile information, at least comprising the horizontal and/or vertical parameter of a wake center of the wind field in direction to the second wind turbine.

According to a further preferred embodiment, the wind speed profile information may be output via an interface for determination of a control information for controlling the first and/or second wind turbine to avoid wake approaching the second wind turbine. The determination of a control information for controlling the first and/or second wind turbine may be made via a processing unit. The processing unit may be the same processing unit which is conducting the suggested method or may be a different processing unit.

According to a further preferred embodiment, the wind speed profile information comprises a wake amplitude parameter. In addition or alternatively, a wind speed profile information may comprise a shear parameter. In case that the wind speed profile information contains all four parameters, namely horizontal position parameter, vertical position parameter, wake amplitude parameter and shear parameter, the wind speed profile of the wind field approaching the second turbine can be determined very precisely. This information can be used to determine control information for controlling the first and/or second wind turbine. The parameters of the wind speed profile information might be predicted all together via the data driven model. Alternatively, different data driven models may be used to predict them.

Improved control information can be used for load reduction. In addition, this can help improve to adapt the blade design, in particular for providing lighter blades, cheaper blades and finally reduced Levelized Costs of Electricity (LCOE).

According to a second aspect of the present invention, the invention refers to an apparatus for computer-implemented determination of a wind speed profile information of a wind field approaching a turbine of a wind farm where the wind farm comprises a first upstream wind turbine and a second downstream wind turbine. The apparatus comprises a processing unit configured to perform at each time point of one or more time points during the operation of the wind farm the method according to the invention.

Moreover, the invention refers to a computer program product with a program code, which is stored on a non-transitory machine-readable carrier, for carrying out the above method according to the invention or one or more preferred embodiments thereof when the program code is executed on a computer.

Furthermore, the invention refers to a computer program with a program code for carrying out the method according to the invention or one or more preferred embodiments thereof when the program code is executed on a computer.

An embodiment of the present invention will now be described in detail with respect to the accompanying drawings.
- Fig. 1: shows a schematic illustration of a wind farm comprising a first upstream wind turbine and a second downstream wind turbine.
- Fig. 2: is a schematic illustration of a computing system for performing an embodiment of the invention.

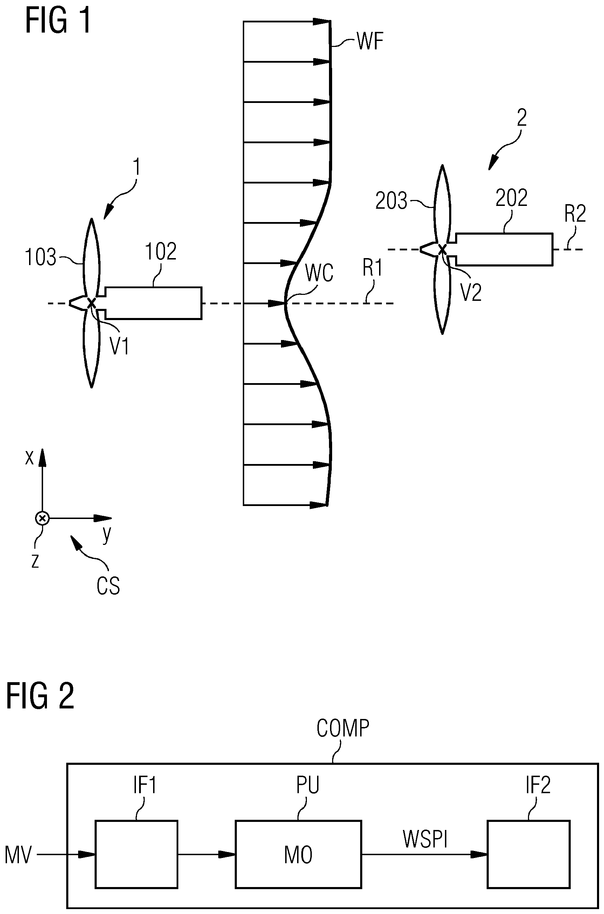

Fig. 1 shows a section of a wind farm comprising a first wind turbine 1 and a second wind turbine 2. The wind farm typically has more than those two wind turbines. The method described herein is applied to the wind turbines 1 and 2. Nevertheless, the method may also be applied to other pairs of wind turbines being part of the wind farm.

The wind turbines 1, 2 are shown in plan view from above. A 3D coordinate system CS for indicating the spatial arrangement of the wind turbines is shown in the lower part of Fig. 1. The vertical direction is indicated by the z-axis of the coordinate system CS whereas the directions parallel to the horizontal direction are indicated by the x-axis and y-axis of the coordinate system CS. The wind direction is along the y-axis of the coordinate system CS.

To align the yaw angle, wind turbines 1 and 2 comprise an upper section being located on top of a tower which extends in the vertical z-direction. The upper section comprises a nacelle 102, 202 accommodating an electric generator for generating electricity. Furthermore, the upper section comprises a rotor 103, 203 having three rotor blades with an angle of 120° therebetween where Fig. 1 only shows two of those blades of the turbines 1 and 2. The rotor 103 is rotated around the horizontal rotor axis R1, R2 by wind resulting in the generation of electricity by the generator within the nacelle 102, 202. The upper section of turbine 1 can be pivoted around the vertical yaw axis V1. The upper section of turbine 2 can be pivoted around the vertical yaw axis V2.

Wind turbines 1 and 2 comprise a plurality of sensors for obtaining measurement values. The measurement values are captured by the sensors to monitor and/or control the respective first and second wind turbines 1 and 2. In particular, wind speed, rotor speed, electric power, pitch angles, nacelle acceleration in x-axis and y-axis, vibration, and so on are captured by respective sensors. Without any specific controlling, the yaw angles of the upper sections around their respective yaw axes V1 and V2 are adjusted such that the rotor axes R1 and R2 correspond to the wind direction measured by respective wind sensors installed at both turbines 1 and 2.

Wind turbine 1 is an upstream turbine with respect to the wind direction. Turbine 1 extracts energy from the wind and thus reduces the wind speed with the result of reduced wind speeds downstream. In the view from above the wind field WF behind the upstream turbine 1 changes such that, due to wake, wind with reduced speed is approaching the second turbine 2 which is a downstream turbine. The wake center WC is an important characteristic of the wind that is derived from the horizontal and/or vertical wind speed profile as shown in Fig. 1 as in the wake center wind has the lowest speed. Without specific controlling, downstream turbine 2 aligns its yaw angle to face the wind direction perpendicular. However, this system of self-oriented turbines doesn't take the wake into account and leads to sub-optimal performance of the wind farm in total.

By adapting the operation of the upstream turbine 1 in such a way that wake is steered away from the downstream turbine 2, power produced from the downstream turbine can be increased. Even small yaw alignments of the upstream turbine 1 lead to high increases or losses of electric power produced by the wind farm. The method described in the following provides an easy method to detect and correct those "yaw misalignments" due to a self-oriented controlling.

An improved controlling can be achieved if the wake center WC in the wind field WF approaching the downstream turbine is known as this knowledge allows for controlling the yaw angles of the wind turbines 1 and 2 such that the AEP in total can be optimized. The wake center WC can be characterized by means of a horizontal and/or vertical position parameter of a wind speed profile information WSPI. Those parameters can be determined by capturing measurement values of the sensors of the downstream turbine 2 and transferring them by a suitable communication link to an interface IF1 of a computing system COMP of the wind farm (Fig.2). The controller or computing system COMP comprises a processing unit PU implementing a trained data driven model MO receiving the measurements values from the interface IF1 as digital input and providing the wind speed profile information WSPI (i.e. the horizontal and/or vertical position parameter) as a digital output at an interface IF2 for further processing, for example controlling the yaw angles of the first and/or second wind turbines 1 and 2.

In the embodiment described herein, the trained data driven model MO is a Deep Neural Network having been learned beforehand by training data. Training data may be simulation data performed by a BHawC simulation which simulate the wake impact of an upstream turbine on a downstream turbine. The BHawC simulation data simulates average wind speeds which might occur in actual operation of the wind farm. The simulation data may consider as further input data, for example, turbulence intensity, different coefficients of average shear and a yaw error. The simulations are varied such that the simulated wake center varies from a lower border to an upper border with reference to the rotor diameter and a given step size. The wake deficit, i.e. a lateral displacement in x-axis is defined as high. As the data needed for training cannot be measured from sensor data, BHawC simulations are used for training the data driven model. Simulation data provides a matrix of combination of the input parameters of the data driven model.

Deep Neural Networks are well known from the prior art and particularly suitable for processing measurement values. A Deep Neural Network comprises an input layer having a number of input channels corresponding to the number of different measurement values, that are used to train the network. The Deep Neural Network may have, for example, two hidden layers. It is to be understood that the number of hidden layers of the Deep Neural Network can be less than two or more than two as well. These may be fully connected meaning that all nodes from the input layer are connected to each node of the first hidden layer. The same may hold for the first hidden layer to the nodes of the second hidden layer. Finally, there is an output layer which has at least one node. The nodes of the output layer may be fully connected to the last hidden layer. It is to be understood that a full connection of the nodes between two adjacent layer is not necessary.

To determine the wind speed profile, a number of different parameters corresponding to nodes of the output layer shall be predicted. Most important is the horizontal position of the wake center represented by a horizontal position parameter. In addition or alternatively, the wake center can be defined by a vertical position corresponding to a vertical position parameter. For further refinement, the wind speed profile information may comprise a wake amplitude parameter and/or a shear coefficient. Further output variables might be considered, if applicable. These parameters are the targets variables of the Deep Neural Network. However, it is to be understood that the output layer may only comprise a part of these target variables as well. The Deep Neural Network is trained by minimizing a cost function and adapting the weights of all hidden layer nodes accordingly.

Those target variables which are considered in the output layer form the wind speed profile information WSPI which is used to determine the wind speed profile approaching the second downstream turbine 2. The wind speed profile information WSPI which is provided at the second interface IF2 of the computing system COMP can be used for controlling the first and/or second wind turbines 1 and 2 to avoid wake approaching the downstream turbine 2. In particular, the yaw angle of the first wind turbine 1 can be controlled such that the wake center WC is steered away from the second wind turbine 2.

During training of the Deep Neural Network, the importance of specific measurement values which have to be used as input variables to the Deep Neural Network can be calculated for prediction of the wind speed profile information WSPI. Simulations have shown that, for example, tower torsion of the downstream turbine is an important measurement variable, followed by side-side tower sensor measuring vibrations of the tower. Having determined the variable importance, the number of features which has to be fed to the Deep Neural Network can be reduced, thereby still receiving a sufficient model performance.

In an alternative embodiment, prediction of the different parameters characterizing the wake center might be made by a Convolutional Neural Network or a Recurrent Neural Network.

The invention as described in the foregoing has several advantages. Particularly, an easy and straight forward method in order to determine a wind speed profile information or calculation of a wake center is provided. To do so, measurement values of a downstream turbine are obtained and input to a suitably trained data driven model. Controlling of the upstream and/or downstream turbines may be made automatically based on the wind speed profile information in order to maximize AEP.

## Claims

1. A method for computer-implemented determination of a wind speed profile information (WSPI) of a wind field (WF) approaching a turbine (1, 2) of a wind farm where the wind farm comprises a first upstream wind turbine (1) and a second downstream wind turbine (2), wherein at each time point of one or more time points during the operation of the wind farm the following steps are performed:
- obtaining a number of measurement values (MV) of the second wind turbine (2), the number of measurement values (MV) being captured by respective sensors of the second wind turbine (2) to monitor and/or control the second wind turbine (2);
- determining a wind speed profile information (WSPI) by processing the number of measurement values (MV) by a trained data driven model (MO), where the number of measurement values (MV) is fed as a digital input to the trained data driven model (MO) and the trained data driven model (MO) provides the wind speed profile information (WSPI) as a digital output, where the wind speed profile information (WSPI) at least comprises a horizontal and/or vertical position parameter of a wake center (WC) of the wind field in direction to the second wind turbine (2) and caused by the first wind turbine (1).

2. The method according to claim 1, wherein the trained data driven model (MO) is a neural network, preferably a Deep Neural Network.

3. The method according to claim 1 or 2, wherein the trained data driven model (MO) is a neural network being trained by minimizing a cost function thereby adapting weights of all hidden layer nodes accordingly.

4. The method according to one of the preceding claims, wherein the wind speed profile information (WSPI) is output via an interface (IF2) for determination of a control information for controlling the first and/or second wind turbine (1, 2).

5. The method according to one of the preceding claims, wherein the wind speed profile information (WSPI) comprises a wake amplitude parameter.

6. The method according to one of the preceding claims, wherein the wind speed profile information (WSPI) comprises a shear parameter.

7. An apparatus for computer-implemented determination of a wind speed profile information (WSPI) of a wind field (WF) approaching a turbine (1, 2) of a wind farm where the wind farm comprises a first upstream wind turbine (1) and a second downstream wind turbine (2), wherein the apparatus comprises a processing unit configured to perform at each time point of one or more time points during the operation of the wind farm the following steps:
- obtaining a number of measurement values (MV) of the second wind turbine (2), the number of measurement values (MV) being captured by respective sensors of the second wind turbine (2) to monitor and/or control the second wind turbine;
- determining a wind speed profile information (WSPI) by processing the number of measurement values (MV) by a trained data driven model (MO), where the number of measurement values (MV) is fed as a digital input to the trained data driven model (MO) and the trained data driven model (MO) provides the wind speed profile information (WSPI) as a digital output, where the wind speed profile information (WSPI) at least comprises a horizontal and/or vertical position parameter of a wake center (WC) of the wind field in direction to the second wind turbine (2) and caused by the first wind turbine (1).

8. A wind farm comprising a first wind turbine (1) and a second wind turbine (2), wherein the wind farm comprises an apparatus (4) according to claim 7.

9. A computer program product with program code, which is stored on a non-transitory machine-readable carrier, for carrying out a method according to one of claims 1 to 6 when the program code is executed on a computer.

10. A computer program with program code for carrying out a method according to one of claims 1 to 6 when the program code is executed on a computer.
